# EUROPÄISCHE PATENTSCHRIFT

(11) **EP 1 175 464 B1**
(45) Veröffentlichungstag und Bekanntmachung des Hinweises auf die Patenterteilung: **04.02.2004**
(21) Anmeldenummer: 00929355.6
(22) Anmeldetag: 14.04.2000
(51) Int. Cl.: C09D 133/06, C09D 133/14, C09D 167/02, B05D 7/26

(54) **ZUR MEHRSCHICHTLACKIERUNG VERWENDBARES ÜBERZUGSMITTEL**
COATING AGENTS WHICH CAN BE USED FOR MULTI-LAYER ENAMELING
AGENT DE REVETEMENT S'UTILISANT POUR MISE EN PEINTURE A COUCHES MULTIPLES

(30) Priorität: 16.04.1999 DE 19917232
(43) Veröffentlichungstag der Anmeldung: 30.01.2002
(73) Patentinhaber: E.I. DU PONT DE NEMOURS & COMPANY INCORPORATED, Wilmington, Delaware 19898 (US)
(72) Erfinder: FLOSBACH, Carmen, D-42287 Wuppertal (DE); HERRMANN, Friedrich, D-42117 Wuppertal (DE); LECKEBUSCH, Claudia, D-42115 Wuppertal (DE); SCHUBERT, Walter, D-42349 Wuppertal (DE); TÜCKMANTEL, Astrid, D-42277 Wuppertal (DE)
(74) Vertreter: Gille Hrabal Struck Neidlein Prop Roos
(86) Internationale Anmeldenummer: PCT/EP2000/003371
(87) Internationale Veröffentlichungsnummer: WO 2000/063310

(56) Entgegenhaltungen:
- EP-A- 0 844 285
- US-A- 6 060 556
- PLASDOC - CENTRAL PATENTS INDEX - BASIC ABSTRACTS JOURNAL, SECTION A., Bd. 1994, Nr. 16, XP002146000 DERWENT PUBLICATIONS LTD. LONDON., GB & JP 06 073334 A (KANEBO NSC KK) 15. März 1994 (1994-03-15)

## Beschreibung

Die Erfindung betrifft Überzugsmittel und deren Verwendung bei der Herstellung von Mehrschichtlackierungen, beispielsweise auf dem Kraftfahrzeugsektor, insbesondere bei der Herstellung von Zweischichtlackierungen vom Basislack/Klarlack-Typ.

Unter Esterbildung aushärtende Überzugsmittel auf Basis einer Kombination von epoxidfunktioneller Komponente und carboxylfunktioneller Komponente sind beispielsweise aus EP-A-0 598 280 bekannt. Allgemein zeichnen sich derartige Überzugsmittel aus durch gute Chemikalien- und Säurefestigkeit der aus ihnen erstellten und eingebrannten Überzüge und sind daher besonders geeignet als Klaroder Decklacke bei der Automobilserienlackierung.

Aufgabe der Erfindung ist die Bereitstellung von durch Reaktion von Carboxyl- und Epoxidgruppen vernetzbaren Überzugsmitteln, die verbessert sind hinsichtlich der Lösemittelbeständigkeit, insbesondere Superbenzinbeständigkeit, insbesondere im Falle unterbrannter Überzüge. Die zu findenden Überzugsmittel sollen verwendet werden können als Klarlacküberzugsmittel zur Erzeugung von Basislack/Klarlack-Zweischichtlackierungen, wie sie insbesondere im Bereich der Automobillackierung üblich sind.

Die Aufgabe wird gelöst durch härtbare Überzugsmittel, enthaltend ein Bindemittel/Vernetzersystem, organische Lösemittel und/oder Wasser sowie gegebenenfalls Pigmente und/oder Füllstoffe und gegebenenfalls weitere lackübliche Additive, wobei das Bindemittel/Vernetzersystem 20 bis 80 Gew.-% einer oder mehrerer carboxylfunktioneller Komponenten A) ausgewählt aus carboxylfunktionellen (Meth)acrylcopolymeren und/oder carboxylfunktionellen Polyestern, deren Carboxylfunktionalität jeweils einer Säurezahl von 15 bis 300 mg KOH/g entspricht und 20 bis 80 Gew. - % eines oder mehrerer epoxidfunktioneller (Meth)acrylcopolymerer B) mit einem berechneten Epoxidäquivalentgewicht von 200 bis 700 g/mol enthält, wobei sich die Gew.-% zu 100 Gew.-% addieren und wobei das Vernetzungsverhältnis zwischen Carboxylgruppen der Komponenten A) und Epoxidgruppen der Komponenten B) zwischen 1 : 1 und 1 : 3 liegt, dadurch gekennzeichnet, daß die epoxidfunktionellen (Meth)acrylcopolymeren B) einen verzweigten Molekülaufbau entsprechend einem berechneten Verzweigungsäquivalentgewicht von 5000 bis 60000 g/mol aufweisen.

Das Bindemittel/Vernetzersystem der erfindungsgemäßen Überzugsmittel enthält die Komponenten A) und B) als wesentliche Komponenten sowie gegebenenfalls nachstehend erläuterte optionale Komponenten C), D) und/oder E). Beispielsweise können die erfindungsgemäßen Überzugsmittel nur die Komponenten A) und B) als Bindemittel/Vernetzersystem enthalten, oder das Bindemittel/Vernetzersystem der erfindungsgemäßen Überzugsmittel enthält zusätzlich die optionalen Komponenten C), D) und/oder E).

Der Harzfestkörper der erfindungsgemäßen Überzugsmittel wird gebildet aus der Summe der Harzfestkörper bzw. der nichtflüchtigen Anteile der Komponenten A), B) und der optionalen Komponenten C), D) und E).

Die Härtung der erfindungsgemäßen Überzugsmittel beruht auf der während des Einbrennens stattfindenden chemischen Reaktion der zueinander komplementär reaktiven Gruppen der Komponenten A) uad B); es handelt sich dabei um eine Addition der Carboxyl- an die Epoxidgruppen unter Ausbildung von Carbonsäureesterbindungen.

Die erfindungsgemäßen Überzugsmittel enthalten als Komponente A) eine oder mehrere carboxylfunktionelle Komponenten A). Bei der carboxylfunktionellen Komponente A) der erfindungsgemäßen Überzugsmittel handelt es sich um carboxylfunktionelle (Meth)acrylcopolymere und/oder carboxylfunktionelle Polyester, deren Carboxylfunktionalität jeweils einer Säurezahl von 15 bis 300 mg KOH/g entspricht. Die carboxylfunktionellen (Meth)acrylcopolymeren und/oder carboxylfunktionellen Polyester können urethanisiert und/oder durch Umsetzung mit Lactonen modifiziert sein.

Die gegebenenfalls urethangruppenhaltigen und/oder lactonmodifizierten carboxylfunktionalisierten (Meth)acrylcopolymeren der Komponente A) weisen bevorzugt eine zahlenmittlere Molmasse (Mn) von 1000 bis 30000 g/mol auf. Die gegebenenfalls urethangruppenhaltigen und/oder lactonmodifizierten carboxylfunktionalisierten Polyester der Komponente A) weisen bevorzugt eine errechnete Molmasse von 500 bis 4000 g/mol auf. Die Säurezahl liegt jeweils bei 15 bis 300 mg KOH/g, bevorzugt bei 30 bis 250 mg KOH/g.

Bei der Herstellung der carboxylgruppenhaltigen (Meth)acrylcopolymeren oder Polyester der Komponente A), die gegebenenfalls jeweils Urethangruppen enthalten können, können die Carboxylgruppen direkt durch Verwendung carboxylgruppenhaltiger Bausteine eingeführt werden. Beispiele für zum Aufbau von carboxylgruppenhaltigen (Meth)acrylcopolymeren verwendbare geeignete carboxylgruppenhaltige Monomere sind ungesättigte Carbonsäuren, wie z.B. Acryl-, Methacryl-, Itacon-, Croton, Isocroton-, Aconit-, Malein- und Fumarsäure, Halbester der Malein- und Fumarsäure sowie Carboxyalkylester der (Meth)acrylsäure, z.B. beta-Carboxyethylacrylat und Addukte von Hydroxyalkyl(meth)acrylaten mit Carbonsäureanhydriden, wie z.B. der Phthalsäure-mono-2-(meth)acryloyloxyethylester.

In der vorliegenden Beschreibung und den Patentansprüchen wird der Ausdruck (Meth)acryl verwendet. Dieser bedeutet Acryl und/oder Methacryl.

Bei der Herstellung von carboxylgruppenhaltigen und gegebenenfalls urethangruppenhaltigen (Meth)acrylcopolymeren oder Polyestern der Komponente A) ist es aber auch möglich, zunächst ein Hydroxylgruppen und gegebenenfalls auch schon Carboxylgruppen enthaltendes Polymer aufzubauen und die Carboxylgruppen ganz oder teilweise in einer zweiten Stufe durch Umsetzung mit Carbonsäureanhydriden einzuführen. Bei dieser Arbeitsweise kann mit solchen Mengenverhältnissen gearbeitet werden, daß gegebenenfalls genügend Hydroxylgruppen übrig bleiben, um eine Urethanisierung durchführen zu können.

Für die Addition an die hydroxylgruppenhaltigen Polymeren, die bereits Carboxylgruppen enthalten können, geeignete Carbonsäureanhydride sind die Anhydride von Di- und Polycarbonsäuren, wie beispielsweise bevorzugt Phthalsäure-, Tetrahydro-, Methylhexahydro-, Hexahydrophthal- und Bernsteinsäureanhydrid.

Zur Einführung von Hydroxylgruppen in die gegebenenfalls urethangruppenhaltigen (Meth)acrylcopolymeren der Komponente A) geeignete Monomere sind beispielsweise Hydroxyalkyl(meth)acrylate wie z.B. Hydroxyethyl(meth)acrylat, sowie die bezüglich der Stellung der Hydroxylgruppe isomeren Hydroxypropyl(meth)acrylate, Hydroxybutyl(meth)acrylate und Umsetzungsprodukte aus (Meth)acrylsäure mit dem Glycidylester einer Carbonsäure mit einem tertiären alpha-Kohlenstoffatom. Die Bildung letztgenannter Umsetzungsprodukte kann vor, während oder nach der Polymerisationsreaktion erfolgen.

Bei der Herstellung der (Meth)acrylcopolymeren der Komponente A) können neben den vorstehend genannten Monomeren auch weitere olefinisch ungesättigte Monomere verwendet werden, insbesondere solche, die neben einer olefinischen Doppelbindung keine weiteren funktionellen Gruppen enthalten.

Als weitere olefinisch ungesättigte Monomere geeignet sind beispielsweise insbesondere Alkylester der (Meth)acrylsäure, die im Alkylteil beispielsweise 1 bis 20 C-Atome oder mehr enthalten, wie z.B. Methyl(meth)acrylat, Ethyl(meth)acrylat, Propyl(meth)acrylat, Butyl(meth)acrylat, Isopropyl(meth)acrylat, Isobutyl(meth)acrylat, tertiär-Butyl(meth)acrylat, Hexyl(meth)acrylat, Cyclohexyl(meth)acrylat, 2-Ethylhexyl(meth)acrylat, Decyl(meth)acrylat, Hexadecyl(meth)acrylat.

Beispiele für weitere, geeignete olefinisch ungesättigte Monomere sind die Alkylester der Malein-, Fumar-, Tetrahydrophthal-, Croton-, Isocroton-, Vinylessig- und Itaconsäure, die im Alkylteil beispielsweise 1 bis 20 C-Atome oder mehr enthalten.

Weiterhin können auch kleine Anteile von Monomeren mit mindestens zwei polymerisierbaren, olefinischen Doppelbindungen eingesetzt werden. Bevorzugt liegt der Anteil dieser Monomeren unter 5 Gew.-%, bezogen auf das Gesamtgewicht der Monomeren. Beispiele für derartige Verbindungen sind Hexandioldi(meth)acrylat, Ethylenglykoldi(meth)acrylat, Butandioldi(meth)acrylat, Hexamethylenbis(meth)acrylamid, Trimethylolpropantri(meth)acrylat, Divinylbenzol und ähnliche Verbindungen.

Eine weitere geeignete Komponente sind monovinylaromatische Verbindungen. Vorzugsweise enthalten sie 8 bis 9 Kohlenstoffatome je Molekül. Beispiele für geeignete Verbindungen sind alpha-Methylstyrol sowie die isomeren Methylstyrole, insbesondere Vinyltoluole sowie Styrol.

Die Herstellung der (Meth)acrylcopolymeren der carboxylfunktionellen Komponente A) erfolgt durch radikalische Copolymerisation. Dabei kann es sich als vorteilhaft erweisen, einen Teil der Monomeren zeitversetzt zueinander zuzudosieren.

Zur Herstellung der (Meth)acrylcopolymeren der Komponente A) können die Monomeren oder das eingesetzte Monomerengemisch Radikalinitiatoren enthalten. Sofern Radikalinitiatoren nicht in der Monomerenmischung enthalten sind, können sie zur Monomerenmischung gegebenenfalls geringfügig zeitversetzt zugesetzt oder separat zudosiert werden. Anschließend kann noch über einen längeren Zeitraum, z.B. während mehrerer Stunden nachpolymerisiert werden. Es ist dann möglich, mit einem üblichen Lacklösemittel auf einen gewünschten Feststoffgehalt, beispielsweise in der Größenordnung von 30 bis 80 Gew.-%, beispielsweise 50 bis 60 Gew.-% einzustellen.

Die Herstellung erfolgt beispielsweise als dem Fachmann geläufige radikalische Lösungspolymerisation unter Verwendung von beispielsweise 0,1 bis 4 Gew.-%, bezogen auf die Monomeren-Einwaage, eines Radikalinitiators. Beispiele für Radikalinitiatoren sind Dialkylperoxide, Diacylperoxide, Hydroperoxide, Perester, Peroxiddicarbonate, Perketale, Ketonperoxide; Azoverbindungen, wie 2,2'-Azo-bis-(2,4-dimethyl-valeronitril), Azo-bis-isobutyronitril, C-C-spaltende Initiatoren wie z.B. Benzpinakol-Derivate.

Zur möglichen Urethanisierung der carboxylfunktionalisierten (Meth)acrylcopolymeren der Komponente A) können in einem weiteren Reaktionsschritt Hydroxylgruppen der carboxylfunktionalisierten (Meth)acrylcopolymeren der Komponente A) mit Mono-, Di-, Tri- oder Polyisocyanaten umgesetzt werden. Beispiele für zur Urethanisierung einsetzbare Isocyanate sind Phenylisocyanat, sowie die nachstehend bei der Beschreibung der Zusatzvemetzer D) beispielhaft genannten Polyisocyanate und deren durch Umsetzung mit bezogen auf den Isocyanatgehalt unterstöchiometrischen Mengen an Monoalkoholen erhältliche Defunktionalisierungsprodukte. Die Menge der zur Urethanisierung verwendeten Di-, Tri- oder Polyisocyanate wird in dem Fachmann geläufiger Weise so gewählt, daß ein Gelieren vermieden wird. Natürlich ist es ebenfalls möglich, hydroxylfunktionelle (Meth)acrylcopolymere zu urethanisieren, bevor Carboxylgruppen durch Umsetzung mit Säureanhydriden eingeführt werden.

Die carboxylgruppenhaltigen und gegebenenfalls urethangruppenhaltigen Polyester der Komponente A) können nach üblichen Methoden aufgebaut werden aus aliphatischen und/oder cycloaliphatischen Di-, Tri- oder höherwertigen Alkoholen, gegebenenfalls zusammen mit einwertigen Alkoholen und aus aliphatischen, aromatischen und/oder cycloaliphatischen Carbonsäuren, insbesondere Dicarbonsäuren, sowie höherwertigen Polycarbonsäuren. Beispiele für geeignete Alkohole sind aliphatische Diole, wie Ethylenglykol, 1,2-Propandiol, 1,3-Propandiol, 2,2-Diethyl-1,3-propandiol, die isomeren Butandiole, 1,5-Pentandiol, 3-Methyl-1,5-pentandiol, 1,6-Hexandiol, 2-Ethyl-1,6-hexandiol, 2,2,4-Trimethyl-1,6-hexandiol, 1,4-Dimethylolcyclohexan, mehrwertige aliphatische Alkohole, wie Glycerin, Trimethylolethan, Ditrimethylolpropan, Trimethylolpropan, Pentaerythrit, sowie Veretherungsprodukte von Diolen und Polyolen, z.B. Di- und Triethylenglykol, Polyethylenglykol, Neopentylglykolester von Hydroxypivalinsäure.

Beispiele für geeignete Carbonsäuren sind Adipin-, Azelain-, 1,3- und 1,4-Cyclohexandicarbonsäure, Tetrahydrophthal-, Hexahydrophthal-, Endomethyltetrahydrophthalsäure, die isomeren Phthalsäuren bzw. deren Anhydride sowie deren veresterungsfähige Derivate.

Ebenso wie die bereits beschriebenen carboxylfunktionellen (Meth)acrylcopolymeren der Komponente A) können die carboxylfunktionellen Polyester der Komponente A) urethanisiert werden. Die Reaktionsbedingungen und die verwendbaren Polyisocyanate sind die gleichen wie bei den (Meth)acrylcopolymeren. Möglich ist die Einführung der Urethangruppen durch Umsetzung der carboxyl- und hydroxylfunktionellen Polyester mit Mono-, Di-, Tri- oder höherfunktionellen Polyisocyanaten. Ebenfalls möglich ist es, die Urethangruppen bei der Synthese der Polyester selbst einzuführen. Dies geschieht beispielsweise, indem Di- oder Tricarbonsäuren ganz oder teilweise gegen Di- oder Triisocyanate ausgetauscht werden.

Zur Modifizierung mit Lactonen können die Carboxylgruppen der carboxylfunktionellen (Meth)acrylcopolymerisate und Polyester der Komponente A) mit einem Lacton "kettenverlängert" sein. Gleiches gilt für in den (Meth)acrylcopolymerisaten und Polyestern der Komponente A) gegebenenfalls enthaltene Hydroxylgruppen. Die "Kettenverlängerung" ergibt sich durch unter Ringöffnung verlaufende Anlagerung von Lactonen an die Carboxyl- und/oder Hydroxylgruppen. Dabei entstehen endständige, exponierte Carboxyl- bzw. Hydroxylgruppen. Bevorzugt erfolgt die Anlagerung von Lactonen an carboxylfunktionelle (Meth)acrylcopolymerisate und Polyester der Komponente A), die frei von OH-Gruppen sind. Die Anlagerung des Lactons erfolgt bevorzugt als letzter Syntheseschritt bei der Herstellung der betreffenden Komponente A). Ein Beispiel für ein besonders bevorzugt eingesetztes Lacton ist epsilon-Caprolacton.

Die erfindungsgemäßen härtbaren Überzugsmittel enthalten epoxidfunktionelle (Meth)acrylcopolymere B) mit einem berechneten Epoxidäquivalentgewicht von 200 bis 700, bevorzugt 250 bis 500 und insbesondere 300 bis 450 g/mol und einem verzweigten Molekülaufbau entsprechend einem berechneten Verzweigungsäquivalentgewicht von 5000 bis 60000 g/mol, jeweils bezogen auf den B)-Festkörper. Die zahlenmittlere Molmasse (Mn, bestimmt durch Gelpermeationschromatographie mit Polystyrolstandard) der epoxidfunktionellen (Meth)acrylcopolymeren B) kann beispielsweise zwischen 2500 und 10000 liegen, bevorzugt bei 3000 bis 8000. Die Herstellung der epoxidfunktionellen (Meth)acrylcopolymeren der Komponente B) erfolgt durch radikalische Polymerisation, insbesondere Lösungspolymerisation, sie ist dem Fachmann bekannt, beispielsweise aus den vorstehenden Erläuterungen im Zusammenhang mit durch radikalische Polymerisation hergestellten carboxylfunktionellen Harzen A). Bei der radikalischen Copolymerisation werden epoxidfunktionelle, radikalisch polymerisierbare, olefinisch ungesättigte Monomere (I) und radikalisch copolymerisierbare Comonomere (II) in einem solchen Gewichtsverhältnis eingesetzt, daß für die erhaltenen (Meth)acrylcopolymeren B) ein berechnetes Epoxidäquivalentgewicht von 200 bis 700, bevorzugt 250 bis 500 und insbesondere 300 bis 450 g/ mol und ein berechnetes Verzweigungsäquivalentgewicht von 5000 bis 60000 g/mol, jeweils bezogen auf den B)-Festkörper, resultiert.

Unter dem Epoxidäquivalentgewicht der (Meth)acrylcopolymeren B) versteht man die Menge an Festkörper von B) in Gramm, die 1 Mol Epoxidgruppen enthält. Unter dem Verzweigungsäquivalentgewicht der (Meth)acrylcopolymeren B) versteht man die Menge an Festkörper B) in Gramm, die 1 Mol Verzweigungen enthält. Unter einer Verzweigung im Sinne der vorliegenden Erfindung ist jede einzelne der durch Einpolymerisieren von di- oder polyungesättigten Comonomeren, beispielsweise des nachstehend erläuterten Typs IIa, geschaffenen Verbindungsstellen zwischen den an sich linearen Polymerrückgraten, die im wesentlichen aus monoungesättigten Monomeren (wie z.B. den nachstehend erläuterten Typen I und IIb) aufgebaut sind, zu verstehen. Dies sei am Beispiel eines (Meth)acrylcopolymeren B), das Divinylbenzol als einzigen Vertreter von zu Verzweigungen führenden Comonomeren, vollständig einpolymerisiert enthält, erläutert: die Menge an B)-Festharz in Gramm, die 1 Mol Divinylbenzol vollständig einpolymerisiert enthält, entspricht dem Verzweigungsäquivalentgewicht des (Meth)acrylcopolymeren B).

Als epoxidfunktionelle radikalisch polymerisierbare, olefinisch ungesättigte Monomere (I) zur Herstellung der epoxidfunktionellen (Meth)acrylcopolymeren B) können z.B. eingesetzt werden (Meth)allylglycidylether, 3,4-Epoxy-1-vinylcyclohexan, Epoxycyclohexyl(meth)acrylat, Vinylglycidylether, insbesondere jedoch Glycidyl(meth)acrylat. Bevorzugt handelt es sich bei den epoxidfunktionellen (Meth)acrylcopolymeren B) um Glycidyl(meth)acrylat-Copolymere.

Bei der Herstellung der epoxidfunktionellen (Meth)acrylcopolymeren der Komponente B) werden Comonomere (IIa) eingesetzt, die zu einem verzweigten Molekülaufbau der (Meth)acrylcopolymeren entsprechend einem berechneten
Verzweigungsäquivalentgewicht von 5000 bis 60000 g/mol, bezogen auf den B)-Festkörper, führen. Bei den Comonomeren (IIa) handelt es sich um Verbindungen mit mindestens zwei radikalisch polymerisierbaren, olefinischen Doppelbindungen im Molekül. Solche Comonomere werden beispielsweise in einem Anteil von 0,5 bis 5 Gew.-%, bezogen auf das Gesamtgewicht der zur Herstellung der (Meth)acrylcopolymeren der Komponente B) eingesetzten Monomeren verwendet. Beispiele für Comonomere (IIa) mit mindestens zwei radikalisch polymerisierbaren, olefinischen Doppelbindungen sind Hexandioldi(meth)acrylat, Ethylenglykoldi(meth)acrylat, Butandioldi(meth)acrylat, Hexamethylenbis(meth)acrylamid, Trimethylolpropantri(meth)acrylat, Divinylbenzol. Weitere Beispiele für Comonomere (IIa) sind Verbindungen, die hergestellt werden können durch Kondensations- oder bevorzugt durch Additionsreaktion komplementärer Verbindungen, die jeweils neben einer oder mehreren olefinischen Doppelbindungen eine oder mehrere weitere funktionelle Gruppen im Molekül enthalten. Bei den weiteren funktionellen Gruppen der einzelnen komplementären Verbindungen handelt es sich um Paare von zueinander komplementär reaktiven Gruppen, insbesondere um Gruppen, die im Sinne einer möglichen Kondensationsoder Additionsreaktion miteinander reagieren können. Die Kondensations- oder Additionsreaktion kann dabei, gegebenenfalls katalysiert, vor oder bevorzugt während und/oder nach der Copolymerisation unter vollständigem Verbrauch einer oder beider der zueinander komplementär reaktiven Gruppen stattfinden. Die durch Kondensations- oder bevorzugt durch Additionsreaktion komplementärer Verbindungen herstellbaren Comonomeren (IIa) können also zunächst separat hergestellt werden, bevor sie bei der Copolymerisation zur Herstellung der epoxidfunktionellen (Meth)acrylcopolymeren B) eingesetzt werden; bevorzugt entstehen sie während der Copolymerisation in situ und/oder nach beendeter Copolymerisation. In jedem Fall erfolgt die Bildung der Comonomeren (IIa) unter vollständigem Verbrauch einer oder beider der jeweiligen zueinander komplementär reaktiven Gruppen.

Im Rahmen der vorliegenden Erfindung werden durch Additionsreaktion hergestellte Comonomere (IIa) bevorzugt.

Nicht als Einschränkung zu verstehende Beispiele für durch Kondensationsreaktion hergestellte, mehr als eine olefinische Doppelbindung enthaltende Comonomere (IIa) sind aus alkoxysilanfunktionellen (Meth)acrylmonomeren nach Hydrolyse unter Abspaltung von Alkohol und Ausbildung von Siloxanbrücken gebildete Umsetzungsprodukte. Weitere Beispiele sind aus Hydroxyalkyl(meth)acrylaten und an der Isocyanatgruppe blockierten olefinisch ungesättigten Isocyanaten, wie Isocyanatoalkyl(meth)acrylat oder m-Isopropenyl-alpha, alpha-dimethylbenzylisocyanat unter Abspaltung des Blockierungsmittels und Bildung von Urethangruppen gebildete Umsetzungsprodukte.

Nicht als Einschränkung zu verstehende Beispiele für bevorzugt durch Additionsreaktion hergestellte, mehr als eine olefinische Doppelbindung enthaltende Comonomere (IIa) sind aus Hydroxyalkyl(meth)acrylaten und olefinisch ungesättigten Isocyanaten, wie Isocyanatoalkyl(meth)acrylat oder m-Isopropenyl-alpha,alphadimethylbenzylisocyanat unter Bildung einer Urethangruppe gebildete Additionsprodukte oder durch ringöffnende Addition der Epoxidgruppe von ungesättigten Epoxidverbindungen an die Carboxylgruppe einer ungesättigten Säure unter Bildung einer Ester- und einer Hydroxylgruppe gebildete Umsetzungsprodukte. Im Rahmen der vorliegenden Erfindung besonders bevorzugt ist das aus Glycidyl(meth)acrylat und (Meth)acrylsäure gebildete Additionsprodukt.

Neben den Epoxidgruppen können die (Meth)acrylcopolymeren B) Hydroxylgruppen enthalten, beispielsweise entsprechend einer auf den B)-Festkörper bezogenen Hydroxylzahl bis zu 60 mg KOH/g, bevorzugt zwischen 0 und 40 mg KOH/g. Die Hydroxylgruppen können dabei beispielsweise aus Comonomeren (IIa) mit mindestens zwei olefinischen Doppelbindungen und mindestens einer Hydroxylgruppe im Molekül herrühren und/oder es werden hydroxyfunktionelle Comonomere (IIb) mit nur einer olefinischen Doppelbindung im Molekül eingesetzt. Zur Einführung eines entsprechenden Hydroxylgruppengehaltes in die epoxidfunktionellen (Meth)acrylcopolymeren der Komponente B) geeignete Comonomere (IIb) sind beispielsweise Hydroxyalkyl(meth)acrylate wie z.B. Hydroxyethyl(meth)acrylat, bezüglich der Stellung der Hydroxylgruppe isomere Hydroxypropyl(meth)acrylate, Hydroxybutyl(meth)acrylate und Umsetzungsprodukte aus (Meth)acrylsäure und dem Glycidylester einer Carbonsäure mit einem tertiären alpha-Kohlenstoffatom.

Neben den epoxidfunktionellen, olefinisch ungesättigten Monomeren (I), den zu einem verzweigten Molekülaufbau führenden Comonomeren (IIa) und den gegebenenfalls enthaltenen hydroxyfunktionellen Comonomeren (IIb) können die epoxidfunktionellen (Meth)acrylcopolymeren weitere radikalisch copolymerisierbare Comonomere (IIc) enthalten, die neben der olefinischen Doppelbindung keine in den Härtungsmechanismus der erfindungsgemäßen Überzugsmittel eingreifende oder diesen störende funktionelle Gruppen, insbesondere keine weiteren funktionellen Gruppen enthalten, beispielsweise Alkylester der (Meth)acrylsäure, die im Alkylteil beispielsweise 1 bis 20 C-Atome oder mehr enthalten, wie z.B. Methyl(meth)acrylat, Ethyl(meth)acrylat, Propyl(meth)acrylat, Butyl(meth)acrylat, Isopropyl(meth)acrylat, Isobutyl(meth)acrylat, tertiär-Butyl(meth)acrylat, Hexyl(meth)acrylat, (Alkyl)cyclohexyl(meth)acrylat, (Iso)bornyl(meth)acrylat, 2-Ethylhexyl(meth)acrylat, Decyl(meth)acrylat, Hexadecyl(meth)acrylat, Lauryl(meth)acrylat; monovinylaromatische Verbindungen, wie alpha-Methylstyrol, die isomeren Methylstyrole, Vinyltoluole, insbesondere Styrol; Alkylester der Malein-, Fumar-, Tetrahydrophthal-, Croton-, Isocroton-, Vinylessig- und Itaconsäure, die im Alkylteil beispielsweise 1 bis 20 C-Atome oder mehr enthalten.

Bevorzugt enthalten die verzweigten (Meth)acrylcopolymeren B) neben den Epoxidgruppen und den gegebenenfalls enthaltenen Hydroxylgruppen keine weiteren funktionellen Gruppen, sie enthalten ausdrücklich keine Carboxylgruppen, bzw. sie sind frei von Carboxylgruppen.

Besonders bevorzugt handelt es sich bei den verzweigten (Meth)acrylcopolymeren B) um solche, deren Verzweigungen sich aus in einem Mengenanteil von 1 bis 4 Gew.-% einpolymerisiertem Glycidyl(meth)acrylat/(Meth)acrylsäure-Addukt als Comonomer (IIa), bezogen auf die Gesamtmenge der zur Herstellung der verzweigten (Meth)acrylcopolymeren B) eingesetzten olefinisch ungesättigten Monomeren, ableiten.

Bei der Bereitung der erfindungsgemäßen Überzugsmittel werden die Mengenverhältnisse so gewählt, daß zwischen der carboxylgruppenhaltigen Komponente A) und den epoxidfunktionellen (Meth)acrylcopolymeren B) ein molares Verhältnis der Carboxyl- zu Epoxidgruppen von 1 : 1 bis 1 : 3, bevorzugt 1 : 1,2 bis 1 : 2,5 vorliegt.

Die erfindungsgemäßen Überzugsmittel können, jeweils bezogen auf den Feststoffgehalt, 0 bis 30 Gew.-%, z.B. 5 bis 30 Gew.-%, eines oder mehrerer von den Komponenten A) und B) unterschiedliche Polymerpolyole C) enthalten, bezogen auf die Summe der Feststoffgewichte der Komponenten A) und B).

Bei den Polymerpolyolen C) handelt es sich beispielsweise um aus hydroxyfunktionellen Polyestern, Polyurethanen und/oder (Meth)acrylcopolymeren ausgewählte Polymerpolyole, die verschieden sind von gegebenenfalls Hydroxylgruppen enthaltenden Komponenten A). Die in den erfindungsgemäßen Überzugsmitteln eingesetzten Polymerpolyole C) weisen beispielsweise eine zahlenmittlere Molmasse (Mn) von 500 bis 10000 auf. Die Polymerpolyole C) besitzen mindestens zwei Hydroxylfunktionen im Molekül. Neben den Hydroxylgruppen entsprechend einer Hydroxylzahl von beispielsweise 30 bis 350 mg KOH/g können die Polymerpolyole C) auch Carboxylgruppen entsprechend einer Säurezahl von 0 bis 15 mg KOH/g enthalten. Die Polymerpolyole C) enthalten neben den Hydroxylgruppen und den gegebenenfalls vorhandenen Carboxylgruppen bevorzugt keine weiteren funktionellen Gruppen, insbesondere keine Epoxidgruppen.

Neben den Komponenten A), B) und C) können die erfindungsgemäßen Überzugsmittel auch ein oder mehrere von den Komponenten A), B) und C) unterschiedliche zusätzliche Vernetzer D) enthalten, die eine Zusatzvernetzung insbesondere unter Einbezug von Hydroxylgruppen, beispielsweise im Bindemittelsystem vorhandener und/oder während des Einbrennens im Zuge der Epoxid/Carboxyl-Additionsreaktion gebildeten Hydroxylgruppen, ermöglichen. Die Zusatzvernetzer D) sind in Mengenanteilen von insgesamt 0 bis 20 Gew.-%, bezogen auf die Summe der Komponenten A), B) und C) enthalten, jeweils bezogen auf den Feststoffgehalt.

Beispiele für Zusatzvernetzer D) sind lackübliche Aminoplastharze, insbesondere Melaminharze. Beispiele sind butanol-, isobutanol- und/oder methanolveretherte Melaminharze.

Weitere Beispiele für Zusatzvernetzer D) sind unter Estergruppenbildung, insbesondere unter Bildung von Urethangruppen (Carbaminsäureestergruppen) vernetzende Komponenten auf Triazinbasis, wie beispielsweise bevorzugt Tris(alkoxycarbonylamino)triazin.

Weitere Beispiele für Zusatzvernetzer D) sind lackübliche blockierte Polyisocyanate, die aus freien Polyisocyanaten durch Umsetzung mit unter den Einbrennbedingungen wieder abspaltbaren ein aktives Wasserstoffatom enthaltenden Verbindungen hergestellt werden können.

Beispiele für einsetzbare Polyisocyanate sind insbesondere cycloaliphatische und aliphatische Diisocyanate wie Tetramethylendiisocyanat, Hexamethylendiisocyanat, 2,2,4-Trimethylendiisocyanat, Cyclohexan-1,3- und 1,4-diisocyanat, Isophorondiisocyanat, Biscyclohexylmethandiisocyanat sowie davon abgeleitete Polyisocyanate, beispielsweise vom Biuret-, Isocyanurat-, Uretdion-, Carbodiimid-, Urethan- und/oder Allophanatgrüppen enthaltenden Typ.

Besonders gut geeignet sind die bekannten Polyisocyanate, die üblicherweise bei der Herstellung von Lacken eingesetzt werden, z.B. Biuret-, Isocyanurat- oder Urethangruppen aufweisende Modifizierungsprodukte der oben genannten einfachen Polyisocyanate, insbesondere Tris-(6-Isocyanatohexyl)-biuret, das sich von Isophorondiisocyanat oder Hexandiisocyanat ableitende Isocyanurat oder niedermolekulare, Urethangruppen aufweisende Polyisocyanate, wie sie durch Umsetzung von im Überschuß eingesetzten Isophorondiisocyanat mit einfachen mehrwertigen Alkoholen des Molekulargewichtsbereiches 62 bis 300, insbesondere mit Trimethylolpropan erhalten werden können.

Es werden übliche Verkappungsmittel eingesetzt, beispielsweise Verbindungen mit einem aktiven Wasserstoffatom, ausgewählt aus CH-aciden Verbindungen wie Acetylaceton, Acetessigsäurealkylester, Malonsäuredialkylester; Alkohole; Oxime wie Methylethylketoxim; Lactame wie epsilon-Caprolactam; Imidazol- oder Pyrazolderivate .

Weitere Beispiele für Zusatzvernetzer D), die in den erfindungsgemäßen Überzugsmitteln enthalten sein können, sind organische Verbindungen, die mindestens zwei cyclische Carbonsäureanhydridgruppen pro Molekül aufweisen. Der Gehalt dieser Verbindungen an Carbonsäureanhydridgruppen (formal berechnet als C₄O₃, Molekulargewicht = 96) liegt bevorzugt bei 5 bis 88 Gew.-%, besonders bevorzugt 6 bis 30 Gew.-%. Geeignet sind beispielsweise Trimellithsäureanhydrid-Ester von Ethylenglykol, Propylenglykol, Diethylenglykol, Triethylenglykol, Neopentylglykol, Glycerin oder Trimethylolpropan, bevorzugt hergestellt im Verhältnis 1mol Trimellithsäureanhydrid pro mol Hydroxylgruppen.

Weitere geeignete Polyanhydride sind beispielsweise Benzophenontetracarbonsäuredianhydrid und 1,2,4,5-Benzoltetracarbonsäuredianhydrid.

Bevorzugte Polyanhydride sind Copolymerisate von olefinisch ungesättigten Monomeren, die pro Molekül im statistischen Mittel mindestens zwei cyclische Carbonsäureanhydridgruppen aufweisen. Bevorzugt handelt es sich hierbei um Copolymerisate von Maleinsäureanhydrid und/oder Itaconsäureanhydrid mit üblichen Comonomeren wie sie beispielsweise im Zusammenhang mit der Komponente A) beschrieben sind.

Weiterhin können die erfindungsgemäßen Überzugsmittel 0 bis 10 Gew.-% einer oder mehrerer von den epoxidfunktionellen (Meth)acrylcopolymeren B) unterschiedliche Polyepoxidkomponenten und/oder einer oder mehrerer Monoepoxidverbindungen E), jeweils bezogen auf die Summe der A)- und B)-Festkörperbeiträge, enthalten.

Beispiele für von den epoxidfunktionellen (Meth)acrylcopolymeren der Komponente B) unterschiedliche Polyepoxidkomponenten E) sind Verbindungen mit mindestens zwei Epoxidfunktionen im Molekül und einem berechneten Epoxidäquivalentgewicht von beispielsweise 200 bis 700, bevorzugt 250 bis 500 und insbesondere 300 bis 400, jeweils bezogen auf Festharz. Die zahlenmittlere Molmasse (Mn) liegt bevorzugt bei 200 bis 10000.

Beispiele für Polyepoxidkomponenten E) sind übliche Di- oder Polyepoxide, z.B. Polyglycidylether auf Basis von Diethylenglykol, Dipropylenglykol, Polypropylenglykol, Bisphenol A oder Triglycidylether von Glycerin. Weitere Beispiele für Di- oder Polyepoxide sind solche auf der Basis von Di- oder Polyglycidylestern. Beispiele hierfür sind Umsetzungsprodukte aus 1-Hydroxy-2,3-epoxypropan mit Phthal- oder Terephthalsäure zu Phthal- oder Terephthalsäurebis(2,3-epoxypropylester) oder einem Diglycidylether von Bisphenol A mit Trimellithsäureanhydrid zu Polyestern, beispielsweise mit einer zahlenmittleren Molmasse (Mn) von 500 bis 2000.

Bevorzugte Polyepoxidkomponenten E) sind epoxidfunktionelle (Meth)acrylcopolymere, insbesondere Glycidyl(meth)acrylat-Copolymere, mit unverzweigtem Aufbau des Makromoleküls. Die zahlenmittlere Molmasse (Mn) kann beispielsweise zwischen 1000 und 10000 liegen, bevorzugt bei 2000 bis 5000.

Bei Monoepoxiden E) handelt es sich um unter den Einbrennbedingungen im wesentlichen nichtflüchtige Substanzen, beispielsweise beträgt der flüchtige Anteil bevorzugt unter 1 Gew.-%, bezogen auf die Gesamtmenge an Monoepoxid E). Die Molmassen der Monoepoxide E) liegen über 150 und bevorzugt sind derartige Verbindungen mit einer zahlenmittleren Molmasse von bis zu 3000, besonders bevorzugt unter 1000.

Beispiele für derartige Verbindungen sind z.B. Umsetzungsprodukte aus einer Diglycidylverbindung, z.B. eines Diglycidylethers, wie einem Mol Bisphenol-Adiglycidylether und einem Mol einer gesättigten oder ungesättigten Monocarbonsäure wie Essigsäure, Propionsäure oder Isononansäure. Weitere Beispiele sind Umsetzungsprodukte von Di- oder Polyepoxiden wie z.B. Polyglycidylether auf der Basis von Diethylenglykol, Dipropylenglykol, Polypropylenglykol mit einem Zahlenmittel des Molgewichts (Mn) von bis zu 2000 und Triglycidylether von Glycerin und/oder Polyphenolen wie Bisphenol A oder F mit den genannten Monocarbonsäuren. Besonders bevorzugt ist der Glycidylester der Versaticsäure.

Die erfindungsgemäßen Überzugsmittel weisen im applikationsfähigen Zustand beispielsweise einen Festkörpergehalt, gebildet aus dem Harzfestkörper des Bindemittel/Vernetzersystems sowie gegebenenfalls enthaltenen weiteren nichtflüchtigen Bestandteilen, von 35 bis 60 Gew.-% auf. Als flüchtige Bestandteile enthalten sie organische Lösemittel, wie sie bei der Herstellung von Überzugsmitteln, beispielsweise Lacken üblich sind. Die organischen Lösemittel können bei der Herstellung der erfindungsgemäßen Überzugsmittel separat zugesetzt werden oder sie stammen als Bestandteil aus anderen bei der Herstellung der erfindungsgemäßen Überzugsmittel eingesetzten Komponenten, beispielsweise des Bindemittel/Vernetzersystems. Beispiele sind Glykolether, wie Ethoxypropanol, Butoxypropanol, Hexylglykol, Isopropylglykol, Methoxypropanol, Methoxybutanol, Butylglykol, Butyldiglykol, Dipropylenglykoldimethylether, Dipropylenglykolmonomethylether, Ethylenglykoldimethylether, Diethylenglykoldimethylether, Propylenglykoldimethylether, Dipropylenglykolbutylether; Glykoletherester, wie Ethylglykolacetat, Butylglykolacetat, Methylglykolacetat, 3-Methoxy-n-butylacetat, Butyldiglykolacetat, Methoxypropylacetat, Ethylethoxypropionat, Ethoxypropylacetat, Propylenglykoldiacetat; Ester, wie Butyrolacton, Propylencarbonat, Ethylacetat, (Iso)butylacetat, (Iso)amylacetat; Ketone, wie Methylethylketon, Diethylketon, Methylisobutylketon, Ethylamylketon, Methylisoamylketon, Diisobutylketon, Cyclohexanon, Isophoron; Alkohole, wie Methanol, Ethanol, n- und Isopropanol, n-und Isobutanol, 2-Ethylhexanol, Cyclohexanol, Benzylalkohol, Isodekanol, Isononylalkohol, Isotridecylalkohol, Ethylenglykol, Propylenglykol, Diethylenglykol, Dipropylenglykol, Triethylenglykol, Hexylenglykol; aromatische Kohlenwasserstoffe, wie Xylol, Toluol, Tetralin sowie Gemische aromatischer bzw. araliphatischer Kohlenwasserstoffe des Siedebereichs 150 bis 270°C, z.B. Solvesso 100 (eingetragenes Warenzeichen für ein Gemisch aromatischer Kohlenwasserstoffe mit einem Siedebereich von 155 bis 185°C) und aliphatische Kohlenwasserstoffe, wie n-Heptan, Isoheptan, Cyclohexan, sowie Gemische aliphatischer Kohlenwasserstoffe des Siedebereichs 60 bis 250°C, z.B. Benzin- und Petroleumfraktionen.

Die erfindungsgemäßen Überzugsmittel können auch in wäßriger Form vorliegen, wobei sie frei von organischen Lösemitteln sein oder einen geringen Anteil an organischen Lösemitteln aufweisen können. Der Gehalt an Wasser liegt z.B. bei 30 bis 70 Gew.-%; der Gehalt an Lösemittel neben Wasser liegt z.B. bei 0 bis 20 Gew.-% . Zur Herstellung wäßriger Zusammensetzungen ist es beispielsweise möglich, die carboxylfunktionelle Komponente A) weitgehend von organischen Lösemitteln zu befreien, z.B. durch Destillation, anschließend einen Teil der Carboxylgruppen zu neutralisieren, z. B. mit Basen wie Triethylamin oder Dimethylethanolamin und dann in Wasser zu emulgieren. In diese Emulsion, in der die Komponente A) als Emulgatorharz wirkt, können dann gegebenenfalls die anderen Bestandteile der erfindungsgemäßen Überzugsmittel einemulgiert werden. Die Zugabe aller anderen Bestandteile kann auch vor der Emulgierung erfolgen.

Ebenfalls möglich ist es beispielsweise auch, das weitgehend von Lösemitteln befreite carboxylfunktionelle Harz der Komponente A) mit dem weitgehend vom Lösemittel befreiten Harz der Komponente B) zu mischen und in einem Wasser/Emulgator-Gemisch mittels einer Rotor/Stator-Anlage zu emulgieren. Ebenso ist es möglich, die Komponenten getrennt zu emulgieren und die Emulsionen zu mischen. Mögliche Emulgatoren sind z.B. ethoxylierte Sorbitanfettsäureester.

Sollen die erfindungsgemäßen Überzugsmittel als pigmentierte Decklacke beispielsweise bei der Herstellung der äußeren Deckschicht einer Mehrschichtlackierung eingesetzt werden, so enthalten sie Pigmente und gegebenenfalls Füllstoffe. Dabei liegt das Pigment plus Füllstoff/Harzfestkörper-Gewichtsverhältnis beispielsweise im Bereich zwischen 0,05 bis 2 : 1. Beispiele für Pigmente sind anorganische und/oder organische Buntpigmente und/oder Effektpigmente, wie z.B. Titandioxid, Eisenoxidpigmente, Ruß, Azopigmente, Phthalocyaninpigmente, Chinacridonpigmente, Metallpigmente, z.B. aus Titan, Aluminium oder Kupfer, Interferenzpigmente, wie z.B. titandioxidbeschichtetes Aluminium, beschichteter Glimmer, Graphiteffektpigmente, plättchenförmiges Eisenoxid, plättchenförmige Kupferpthalocyaninpigmente. Beispiele für Füllstoffe sind lackübliche Füllstoffe, wie z.B. Talkum und Silikate.

Weiterhin können die als pigmentierte Decklacke oder bevorzugt als transparente Klarlacke einsetzbaren erfindungsgemäßen Überzugsmittel lackübliche Additive in lacküblichen Mengen, beispielsweise bis zu 5 Gew.-% bezogen auf den gesamten Lack, enthalten, z.B. transparente Pigmente oder Füllstoffe, Verlaufsmittel, Reaktivverdünner, Farbstoffe, Lichtschutzmittel, Antioxidantien, Rheologiesteuerer, wie z.B. disubstituierte Harnstoffe, Polymermikroteilchen, beispielsweise epoxidfunktionelle Polymermikroteilchen, spätestens während des Einbrennens Formaldehyd liefernde Verbindungen, Katalysatoren zur Katalyse der Reaktion von Carboxyl- und Epoxidgruppen und/oder zur Katalyse der gegebenenfalls möglichen Zusatzvernetzung.

Die erfindungsgemäßen Überzugsmittel können nach bekannten Verfahren, insbesondere durch Spritzen in Schichtdicken beispielsweise von 25 bis 60 µm appliziert werden. Nach einer Abdunstphase wird das applizierte Überzugsmittel durch Erwärmen vernetzt. Die Einbrenntemperaturen liegen z.B. bei 60 bis 180°C, bevorzugt bei 60 bis 160°C.

Die erfindungsgemäßen Überzugsmittel können beispielsweise zur Herstellung der äußeren pigmentierten Decklackschicht einer Mehrschichtlackierung verwendet werden. Insofern betrifft die vorliegende Erfindung auch die Verwendung der erfindungsgemäßen Überzugsmittel als Decklacküberzugsmittel.

Bevorzugt werden die erfindungsgemäßen Überzugsmittel als transparente Klarlacke formuliert, die zur Herstellung der äußeren Klarlackschicht einer Mehrschichtlackierung verwendet werden können. Insofern betrifft die vorliegende Erfindung auch die Verwendung der erfindungsgemäßen Überzugsmittel als Klarlacküberzugsmittel. Beispielsweise kann das erfindungsgemäße Klarlacküberzugsmittel auf ein mit einer farb- und/oder effektgebenden ein- oder mehrschichtigen Vorbeschichtung versehenes Substrat aufgetragen und eingebrannt werden. Die Einbrenntemperaturen der erfindungsgemäßen Klarlacküberzugsmittel liegen beispielsweise zwischen 60 und 160°C. Für Automobilanwendungen liegen sie beispielsweise zwischen 60 und 160, für Anwendungen in der Automobillackierung, z.B. in der Automobilserienlackierung insbesondere zwischen 80 und 160 und bevorzugt zwischen 120 und 150°C.

Bevorzugt werden die erfindungsgemäßen Klarlacküberzugsmittel zur Herstellung einer Basislack/Klarlack-Mehrschichtlackierung verwendet. Dabei erfolgt der Auftrag einer farb- und/oder effektgebenden Basislackschicht auf ein gegebenenfalls vorbeschichtetes Substrat, insbesondere auf vorbeschichtete Automobilkarossen oder deren Teile, bevor die Klarlacküberzugsschicht aus einem erfindungsgemäßen Klarlacküberzugsmittel aufgetragen und eingebrannt wird.

Die farb- und/oder effektgebende Basislackschicht kann vor Auftrag der Klarlackschicht aus dem erfindungsgemäßen Klarlacküberzugsmittel eingebrannt werden, bevorzugt jedoch wird das erfindungsgemäße Klarlacküberzugsmittel nach dem bekannten Naß-in-Naß-Verfahren auf die den Farbton der Mehrschichtlackierung bestimmende Basislackschicht aufgetragen. Dabei erfolgt der Auftrag der Basislackschicht durch Spritzen aus einem farb- und/oder effektgebenden wäßrigen oder lösemittelbasierenden Basislack in einer vom Farbton abhängigen Trockenschichtdicke, beispielsweise zwischen 10 bis 25 µm. Im Anschluß an die Applikation der Basislackschicht erfolgt nach einer kurzen Ablüftphase, z.B. bei 20 bis 80°C, der Auftrag der Klarlackschicht aus dem erfindungsgemäßen Klarlacküberzugsmittel beispielsweise durch Spritzen beispielsweise in einer Trockenschichtdicke von im allgemeinen zwischen 25 und 50 µm. Gegebenfalls kann kurz abgelüftet werden. Danach wird das Substrat dem Einbrennprozeß zugeführt, bei dem die Klarlacküberzugsschicht gemeinsam mit der Basislackschicht bei erhöhten Temperaturen beispielsweise von 60 bis 160°C eingebrannt wird.

Die erfindungsgemäßen Überzugsmittel sind unempfindlich gegenüber Unterbrennbedingungen. Mit den erfindungsgemäßen Überzugsmitteln lassen sich Mehrschichtlackierungen, insbesondere Basislack/Klarlack-Zweischichtlackierungen, insbesondere auf Kraftfahrzeugen und deren Teilen mit hervorragendem optisch-ästhetischem Eindruck, guter Bewitterungsstabilität, guter Chemikalien-, Säure- und Lösemittelbeständigkeit herstellen.

### Beispiel 1 (Herstellung eines unverzweigten epoxidfunktionellen Methacrylcopolymeren):

Es werden 1963 g Xylol vorgelegt und unter Rühren auf Rückfluß erhitzt. Innerhalb von 5 h wird eine Mischung aus 327,6 g Butylacrylat, 168,0 g Butylmethacrylat, 260,4 g Styrol, 1260,0 g Glycidylmethacrylat und 84,0 g tertiär-Butylperbenzoat zugetropft. Anschließend wird mit 168 g Xylol nachgespült. Im Anschluß daran wird 6 h unter Rückfluß nachpolymerisiert. Das errechnete Verzweigungsäquivalentgewicht liegt bei unendlich.

### Beispiel 2 (Herstellung eines verzweigten epoxidfunktionellen Methacrylcopolymeren):

Es wird wie in Beispiel 1 gearbeitet mit dem Unterschied, daß anstelle der 1260,0 g Glycidylmethacrylat 1246,6 g Glycidylmethacrylat und 13,4 g Acrylsäure verwendet werden.
Das errechnete Verzweigungsäquivalentgewicht ist 11284.

### Beispiel 3 (Herstellung eines verzweigten epoxidfunktionellen Methacrylcopolyeren):

Es wird wie in Beispiel 1 gearbeitet mit dem Unterschied, daß anstelle der 1260,0 g Glycidylmethacrylat 1239,8 g Glycidylmethacrylat und 20,2 g Acrylsäure verwendet werden.
Das errechnete Verzweigungsäquivalentgewicht ist 7485.

Durch Mischen der in nachstehender Tabelle genannten Bestandteile (Gewichtsteile) wurden Klarlacke (A, Vergleichsbeispiel; B und C, beide erfindungsgemäß) hergestellt.

| Bestandteile | A | B | C |
|---|---|---|---|
| Carboxyfunktioneller Polyester¹⁾ | 40,0 | 40,0 | 40,0 |
| Harzlösung aus Beispiel 1 | 52,9 | | |
| Harzlösung aus Beispiel 2 | | 54,7 | |
| Harzlösung aus Beispiel 3 | | | 55,6 |
| Lichtschutzmittel | 2,1 | 2,1 | 2,1 |
| Butylglykolacetat | 1 | 1 | 1 |
| Butanol | 5 | 5 | 5 |
| Solvesso 100 | 5 | 5 | 5 |

| | | | |
|---|---|---|---|
| ¹⁾ Carboxylfunktioneller Polyester auf Basis Trimethylolpropan/1,4-Cyclohexandicarbonsäure/Hexahydrophthalsäureanhydrid/Caprolacton, Säurezahl 215 mg KOH/g | | | |

Die Klarlacke werden auf Glasplatten aufgeraktelt. Anschließend wird 5 Minuten abgelüftet und dann 10 Minuten eingebrannt (1. Serie bei 125°C, 2. Serie bei 130°C). Es resultieren hochglänzende Klarlackfilme. Die so erhaltenen Klarlackfilme werden mit Filterpapier belegt und mit Xylol beträufelt. Durch Abdecken mit einem Glas wird ein Verdunsten des Xylols vermieden. Nach 10 Minuten werden das Filterpapier entfernt und Lösemittelrückstände beseitigt.

Die Ergebnisse der Pendelhärtemessung (nach König) an unbelasteten Klarlackfilmen vor der Xylolbelastung sowie nach 15-minütiger und nach 2-stündiger Erholung von der Xylolbelastung sind nachfolgender Tabelle zu entnehmen.

| | A 1./2. Serie | B 1./2. Serie | C 1./2. Serie |
|---|---|---|---|
| Pendelhärte vorher | 129/132 | 114/135 | 124/140 |
| Pendelhärte nach 15 min. Erholung | 14/60 | 23/111 | 68/124 |
| Pendelhärte nach 2 h Erholung | 27/72 | 42/117 | 84/131 |

## Patentansprüche

1. Überzugsmittel, enthaltend ein Bindemittel/Vernetzersystem, organische Lösemittel und/oder Wasser, sowie gegebenenfalls Pigmente und/oder Füllstoffe und gegebenenfalls weitere lackübliche Additive, wobei das Bindemittel/Vernetzersystem enthält
A) 20 bis 80 Gew.-% einer oder mehrerer carboxylfunktioneller Komponenten, ausgewählt aus carboxylfunktionellen (Meth)acrylcopolymeren und/oder carboxylfunktionellen Polyestern, die jeweils urethanisiert oder mit Lacton modifiziert sein können und deren Carboxylfunktionalität jeweils einer Säurezahl von 15 bis 300 mg KOH/g entspricht,
B) 80 bis 20 Gew.-% eines oder mehrerer epoxidfunktioneller (Meth)acrylcopolymerer mit einem berechneten Epoxidäquivalentgewicht von 200 bis 700 g/Mol,
wobei sich die Gewichtsprozent der Komponenten A) und B) zu 100 Gew.-% addieren und das Vernetzungsverhältnis zwischen den Carboxylgruppen der Komponente A) und den Epoxidgruppen der Komponente B) zwischen 1 : 1 und 1 : 3 liegt,
C) 0 bis 30 Gew.-% eines oder mehrerer von den Komponenten A) und B) unterschiedlicher Polymerpolyole C), bezogen auf die Summe der Feststoffgewichte der Komponenten A) und B),
D) 0 bis 20 Gew.-% eines oder mehrerer von den Komponenten A), B) und C) unterschiedlichen zusätzlichen Vernetzer D), bezogen auf die Summe der Komponenten A), B) und C) und
E) 0 bis 10 Gew.-% einer oder mehrerer von der Komponente B) unterschiedlicher Polyepoxide und/oder Monoepoxide, bezogen auf die Summe der Feststoffgewichte der Komponenten A) und B),
**dadurch gekennzeichnet, daß** die epoxidfunktionellen (Meth)acrylcopolyrneren B) einen verzweigten Molekülaufbau, entsprechend einem berechneten-Verzweigungsäquivalentgewicht von 5000 bis 60000 g/Mol, aufweisen.

2. Überzugsmittel nach Anspruch 1, **dadurch gekennzeichnet, daß** es in wäßriger Form vorliegt, wobei das Überzugsmittel entweder emulgatorhaltig ist oder ein Teil der Carboxylgruppen der Komponente A) in neutralisierter Form vorliegt.

3. Verfahren zur Mehrschichtlackierung durch Auftrag einer farb- und/oder effektgebenden Basislackschicht auf ein gegebenenfalls vorbeschichtetes Substrat, und Auftrag einer Klarlacküberzugsschicht, **dadurch gekennzeichnet, daß** eine Klarlacküberzugsschicht aus einem Überzugsmittel gemäß einem der Ansprüche 1 oder 2 aufgetragen wird.

4. Verwendung der Überzugsmittel nach Anspruch 1 oder 2 als pigmentierte oder transparente Klarlacküberzugsmittel bei der Herstellung von Mehrschichtlackierungen.

5. Verwendung nach Anspruch 4 bei der Lackierung von Automobilen.

## Claims

1. A coating composition containing a binder/crosslinking agent system, organic solvents and/or water, optionally together with pigments and/or extenders and optionally further additives conventional in coatings, wherein the binder/crosslinking agent system contains
A) 20 to 80 wt.% of one or more carboxy-functional components selected from among carboxy-functional (meth)acrylic copolymers and/or carboxy-functional polyesters, which may in each case be urethanised or lactone-modified and the carboxy-functionality of which in each case corresponds to an acid value of 15 to 30 mg of KOH/g,
B) 80 to 20 wt.% of one or more epoxy-functional (meth)acrylic copolymers with a calculated epoxy equivalent weight of 200 to 700 g/mol,
wherein the weight percentages of components A) and B) add up to 100 wt.% and the crosslinking ratio between the component A) carboxyl groups and the component B) epoxy groups is between 1:1 and 1:3,
C) 0 to 30 wt.%, relative to the sum of the weights of solids in components A) and B), of one or more polymer polyols C) differing from components A) and B),
D) 0 to 20 wt.%, relative to the sum of components A), B) and C), of one or more additional crosslinking agents D) differing from components
A) , B) and C) and
E) 0 to 10 wt.%, relative to the sum of the weights of solids in components A) and B), of one or more polyepoxides and/or monoepoxides differing from component B),
**characterised in that** the epoxy-functional (meth)acrylic copolymers B) have a branched molecular structure corresponding to a calculated branch equivalent weight of 5000 to 60000 g/mol.

2. A coating composition according to claim 1, **characterised in that** it is in aqueous form, wherein the coating composition either contains emulsifier or a proportion of the component A) carboxyl groups is present in neutralised form.

3. A multilayer coating process by application of a colour-imparting and/or special effect-imparting base coat layer onto an optionally precoated substrate, and application of a clear coat layer, **characterised in that** a clear coat layer of a coating composition according to one of claims 1 or 2 is applied.

4. Use of the coating composition according to claim 1 or 2 as a pigmented or transparent clear coating composition in the production of multilayer coatings.

5. Use according to claim 4 in automotive coating.

## Revendications

1. Agent de revêtement contenant un système d'agents liants/agents de réticulation, des solvants organiques et/ou de l'eau, ainsi que le cas échéant des pigments et/ou des charges et le cas échéant d'autres additifs usuels aux peintures, dans lesquels le système d'agents liants/agents de réticulation contient
A) 20 à 80 % en poids d'un ou plusieurs composants à fonction carboxyle, sélectionnés parmi les copolymères de (méth)acryle à fonction carboxyle et/ou les polyesters à fonction carboxyle, qui peuvent être uréthanisés ou être modifiés avec du lactone et dont la fonctionnalité carboxyle correspond à chaque fois à un indice d'acidité de 15 à 300 mg de KOH/g,
B) 80 à 20 % en poids d'un ou plusieurs copolymères de (méth)acryle comportant une fonction époxyde ayant une masse équivalente d'époxyde calculée de 200 à 700 g/mole,
moyennant quoi les pourcentages en poids des composants A) et B) s'ajoutent jusqu'à 100 % en poids et le rapport de réticulation entre les groupements carboxyle des composants A) et les groupes époxyde des composants B) doit être compris entre 1:1 et 1:3,
C) 0 à 30 % en poids d'un ou plusieurs polymères de polyols C différents des composants A) et B), rapporté à la somme des poids en matière solide des composants A) et B),
D) 0 à 20 % en poids d'un ou plusieurs agents de réticulation complémentaires D) différents des composants A), B) et C), rapporté à la somme des composants A), B), et C) et
E) 0 à 10 % en poids d'un ou plusieurs polyépoxydes et/ou monoépoxydes différents des composants B), rapporté à la somme des poids en matière solide des composants A) et B),
**caractérisés en ce que** les copolymères de (méth)acryle B) à fonction époxyde ont une structure moléculaire ramifiée, correspondant à un poids équivalent de ramification calculé de 5000 à 60000 g/mole.

2. Agent de revêtement selon la revendication 1, **caractérisé en ce qu'**il est sous forme aqueuse, moyennant quoi soit l'agent de revêtement contient un émulsifiant soit une partie des groupes carboxyles du composant A) est sous une forme neutralisée.

3. Procédé de mise en peinture à plusieurs couches, par application d'une couche de peinture de fond colorante et/ou produisant un effet sur un substrat pré-enduit le cas échéant, et par application d'une couche de revêtement de laque transparente, **caractérisé en ce qu'**on applique une couche de revêtement de laque transparente composée d'un agent de revêtement selon l'une des revendications 1 ou 2.

4. Utilisation de l'agent de revêtement selon la revendication 1 ou 2 en tant qu'agent de revêtement de laque transparente ou pigmentée lors de l'application de peinture à plusieurs couches.

5. Utilisation selon la revendication 4 lors de la mise en peinture des automobiles.
